# EUROPEAN PATENT SPECIFICATION

(11) **EP 3 397 068 B1**
(45) Date of publication and mention of the grant of the patent: **14.09.2022**
(21) Application number: 15825764.2
(22) Date of filing: 30.12.2015
(51) Int. Cl.: A23K 10/30, A23K 20/111, A23K 20/163, A23K 50/40, A23K 50/42, A23K 40/25, A23K 40/30

(54) **PET FOOD COMPOSITIONS**
TIERNAHRUNGSZUSAMMENSETZUNGEN
COMPOSITIONS ALIMENTAIRES POUR ANIMAUX DE COMPAGNIE

(43) Date of publication of application: 07.11.2018
(73) Proprietor: Hill's Pet Nutrition, Inc., Topeka, KS 66603 (US)
(72) Inventor: JACKSON, Matthew, Topeka Kansas 66604 (US); JEWELL, Dennis Edward, Lawrence Kansas 66049 (US)
(74) Representative: Wichmann, Hendrik
(86) International application number: PCT/US2015/068193
(87) International publication number: WO 2017/116449

(56) References cited:
- US-A1- 2005 113 334
- DATABASE WPI Week 201422 2014 Thomson Scientific, London, GB; AN 2014-D62586 XP002761070, & CN 103 461 730 A (UNIV JIANGNAN) 25 December 2013 (2013-12-25)
- SUN JIN HUR ET AL: "Review of natural products actions on cytokines in inflammatory bowel disease", NUTRITION RESEARCH, ELSEVIER INC, XX, vol. 32, no. 11, 1 November 2012 (2012-11-01), pages 801-816, XP002697231, ISSN: 0271-5317, DOI: 10.1016/J.NUTRES.2012.09.013
- VILADOMIU MONICA ET AL: "Nutritional protective mechanisms against gut inflammation", JOURNAL OF NUTRITIONAL BIOCHEMISTRY, BUTTERWORTH PUBLISHERS, STONEHAM, GB, vol. 24, no. 6, 27 March 2013 (2013-03-27) , pages 929-939, XP028564212, ISSN: 0955-2863, DOI: 10.1016/J.JNUTBIO.2013.01.006

## Description

### BACKGROUND

Pets require a healthy diet and proper digestion for continued growth and ordinary wellbeing. However, gastrointestinal distress commonly interferes with the ordinary digestion of common pet food compositions. Some of these problems can be quite serious, such as inflammatory bowel disease (IBD) and other chronic digestive conditions. IBD is commonly accompanied by diarrhea, which can be extremely unpleasant to the pet harboring the condition or to a pet owner who must clean up after the pet, particularly if on a chronic basis.

One mechanism for treating IBD and improving inflammatory status in pets is to administer beneficial agents, such as medicaments, prebiotics, probiotics, and the like, through traditional pet food compositions. However, ensuring that the benefit agent is delivered to the target site has been a challenge. The EPO identified in its search the following documents: CN 103 461 730 A discloses a composition comprising tea polyphenols (catechins), and fibers from sources including beans, wheat and yeast. US 2005/113334 A1 is directed to methods and compositions comprising fiber for reducing the quantity of *Desulfovibrio* and/or *Helicobacter spp.* Sun Jin Hur et al. Nutrition Research 32(11): 801-816 (2012) describes the relationship between natural products and cytokine modulation in the context of inflammatory bowel disease. As such, there exists a need for pet food compositions which are able control the release of a benefit agent and ensure that the benefit agent is delivered to the target site. Embodiments of the present invention are designed to meet these needs.

### BRIEF SUMMARY

In some embodiments, the present invention provides a controlled release pet food composition comprising: a matrix comprising: a fiber component comprising a high solubility fiber source and low solubility fiber source, and a polyphenol source; wherein the matrix is adapted to deliver the polyphenol source to the lower gastrointestinal (GI) tract of a mammal after ingestion by the mammal, as further defined in the claims.

Other embodiments provide a method of forming a pet food composition as defined in the claims, comprising the steps of: extruding the matrix to produce a kibble; and applying a surface coating to the kibble, as further defined in the claims.

Still further embodiments provide a pet food composition as defined in the claims for use in a method for treating, preventing, or ameliorating a symptom of an inflammatory disease, condition or disorder, e.g. inflammatory bowel disease, in a mammal, wherein the composition is to be administered in an effective amount to a mammal in need thereof, wherein the mammal is a dog or a cat.

Some embodiments provide a pet food composition as defined in the claims for use in a method of beneficially manipulating the gut microflora of a mammal, comprising administering any one of the compositions described herein to the mammal in need thereof, wherein the mammal is a dog or a cat.

### BRIEF DESCRIPTION OF THE DRAWINGS

Figures 1A, 1B and 1C depict data illustrating that an exemplary composition of the present invention successfully provides polyphenols to the colon where they are metabolized by resident gut microbiota.
Figures 2A, 2B and 2C depict data illustrating that an exemplary composition of the present invention provides elevated serum levels of microbial post-biotics.

### DETAILED DESCRIPTION

In some embodiments, the pet food compositions set forth herein provide a multifactorial therapy based on nutritive dietary factors that: (1) decrease allergenicity due to the use of hydrolyzed proteins; (2) provide readily digestible macronutrients; (3) provide glutaminyl amino acids that provide metabolic intermediates to enterocytes; (4) provide immune modulators that decrease inflammatory responses; and (5) provide microbial cell wall fractions that promote tolerance or hindgut commensal biota. The pet food compositions increase gut microbial production of metabolic end products of dietary polyphenols and/or enhance the absorption of these dietary polyphenols into systemic circulation.

The pet food compositions of the present invention comprise a matrix comprising dietary components capable of providing the desired effect of immune optimization. Specifically, the compositions comprise a matrix comprising an inert, non-fermentable fiber source having polyphenols chemically or physically bound thereto in such a manner so as to be not available for digestion or absorption in the upper gastrointestinal (GI) tract. These fiber-bound polyphenols bypass the upper GI tract and arrive intact to the colon of the animal. It is believed that the gut microbes metabolize dietary fiber; and in the process, liberate the fiber-bound polyphenols. These newly liberated polyphenols are also subject to microbial metabolism, producing small biomolecules called "post-biotics". Post-biotics are absorbed across the colon and distributed systemically where they have pleiotropic effects, including immune modulation which helps to treat IBD and improve the inflammatory response. One benefit of the use of an low solubility fiber source (e.g. lignin), which is poorly soluble in the mammalian lower GI tract, is that it provides for stool bulking.

The matrix comprises a fibrillary network. The fibrillary network comprises fibers having varying dissolution rates. In some embodiments, the dissolution rates of the fibers are pH dependent. In some embodiments, the dissolution rates are temperature dependent. The fibrillary network comprises interfibrillary spaces. The interfibrillary spaces are of dimension sufficient to permit entry of a dissolution agent into the fibrillary network.

As used herein, "dissolution agent" is intended to include a fluid, material, or the like, which enhances the rate of dissolution of the matrix, thereby facilitating release of the benefit agent (e.g. a polyphenol source).

In some embodiments, the matrix comprises a benefit agent which is bound by the fiber source. In some embodiments, the benefit agent can be any ingredient for which targeted delivery in accordance with the present disclosure would be desirable.

In the claimed pet food composition, the benefit agent is a polyphenol source. The polyphenol source is substantially unavailable to the upper GI tract, as a result of the dissolution profile of the controlled release matrix.

The present invention provides a controlled release pet food composition comprising: a matrix comprising: a fiber component comprising a high solubility fiber source and low solubility fiber source, and a polyphenol source; wherein the matrix is adapted to deliver the polyphenol source to the lower gastrointestinal (GI) tract of a mammal after ingestion by the mammal, wherein the mammal is a dog or a cat, as further defined in the claims. The weight ratio of high solubility fiber source to low solubility fiber source is from 1 : 20 to to about 1 : 2. Still further embodiments provide compositions wherein the weight ratio of high solubility fiber source to low solubility fiber source is from about 1 : 15 to about 1: 2, or about 1 : 10 to about 1 : 3. Other embodiments provide compositions wherein the weight ratio of high solubility fiber source to low solubility fiber source is from about 1 : 5 to about 1 : 3. While other embodiments provide compositions wherein the weight ratio of high solubility fiber source to low solubility fiber source is about 1 : 4. In some embodiments, the weight ratio of high solubility fiber source to low solubility fiber source is about 1 : 4.3.

In some embodiments, the terms "high solubility fiber" and "soluble fiber" may be used interchangeably. In some embodiments, the terms "low solubility fiber" and "insoluble fiber" may be used interchangeably.

The high solubility fiber source comprises beet pulp, and may further comprise oat bran, buckwheat groats, pea bran, barley, tomato pomace, citrus pulp, and a combination of two or more thereof. The low solubility fiber source comprises a combination of a cellulosic material and a pecan fiber.

In some embodiments, the polyphenol source is of food or plant origin. In some embodiments, the polyphenol source of food origin comprises a polyphenol of fruit or vegetable origin. In some embodiments, the polyphenol source comprises a flavonoid or a phenolic acid.

In some embodiments, the polyphenol source provides a polyphenol selected from: dehydroxy rosmarinic acid, Coumaroylnepitrin, eupafolin, carnosol, scutellarin, kaempferol, rosmarinic acid, rosmanol, cirsimaritin, luteolin, 6-methoxy-luteolin, 7-epirosmannol, quercetin, catechin, hesperidin, cyanidin, and a combination of two or more thereof.

Some embodiments further comprise a source of hydrolyzed animal or plant protein comprising an amino acid profile. In some embodiments, the source of hydrolyzed animal or plant protein comprises chicken liver. In some embodiments, the source of hydrolyzed animal or plant protein is present in an active content of from about 25 to about 45 wt. %.

In other embodiments, the compositions comprise a source of omega-3, omega-6 or omega-9 fatty acids. Some embodiments comprise high docosahexaenoate fish oil. In some embodiments, the active content of the high docosahexaenoate fish oil is from about 0.5 to about 2.5 wt. %.

Still further embodiments provide a pet food composition as defined in the claims for use in a method for treating, preventing, or ameliorating a symptom of an inflammatory disease, condition or disorder, e.g. inflammatory bowel disease, in a mammal, wherein the composition is to be administered in an effective amount to a mammal in need thereof, wherein the mammal is a dog or a cat, as further defined in the claims.

Some embodiments provide a pet food composition as defined in the claims for use in a method for beneficially manipulating the gut microflora of a mammal, wherein the composition is to be administered in an effective amount to a mammal in need thereof, wherein the mammal is a dog or a cat, as defined in the claims.

Yet other embodiments provide method of forming a pet food composition as defined in the claims, comprising the steps of: extruding a matrix to produce a kibble; applying a surface coating to the kibble; wherein the matrix is adapted to deliver the polyphenol source to the lower gastrointestinal (GI) tract of a mammal after ingestion by the mammal, wherein the mammal is a dog or a cat, as defined in the claims. In some embodiments, the surface coating comprises a palatant.

The present invention is directed to a controlled release composition for a dog or a cat that can be orally administered by veterinarian, pet owner or other caregiver. The composition of the invention is chewable, without any significant loss of the controlled release property. In particular, the benefits associated with the controlled release functionality are substantially maintained even after mastication by the animal. Thus it will be understood that chewable in the present context means that the controlled release performance of the dosage form is effectively resistant to chewing.

Although compositions of the present invention are generally chewed, the present disclosure is intended to encompass compositions which provide controlled release of the benefit agent after swallowing.

As used herein, "controlled release" refers to the rate of release of a pharmaceutically active agent as a function of some property of the dosage form. For example, 1) targeted release, wherein the benefit agent is adapted to be released at a particular location within the body; 2) delayed release, wherein there is a time lag after ingestion of the composition and before the release of the benefit agent is initiated; and 3) pulsatile release, wherein the benefit agent is released in an immediate release or modified release fashion, e.g. targeted or delayed, followed by a time period in which there is very little or no release, followed by yet another period of immediate or modified release and so on; one or more pulses of release can be thus obtained.

As appreciated by those of skill in the art, other delivery profiles are possible and all are considered to be within the scope of controlled release for purposes of the invention.

In some embodiments, the controlled release compositions of the present invention provide a benefit agent (e.g. a polyphenol) in particulate form. In some embodiments, the benefit agent is provided in the form of particles having a size such that when the composition is chewed by an animal the benefit agent (particle) will not be further comminuted to any significant degree.

In addition to the specific methods described herein, the compositions of the present invention can be prepared by various techniques known to those skilled in the art.

In some embodiments, the particulates have an average particle size of up to about 5000 µm; more preferred is an average particle size of about 10 µm to about 5000 µm; still more preferred is an average particle size of about 50 µm to about 2000 µm; yet still more preferred is an average particle size of about 100 µm to about 1000 µm. As one skilled in the art will appreciate, the particles may be of any size of shape as long as they provide the targeted delivery described herein.

In addition to the high solubility and low solubility fiber sources described herein, additional ingredient, e.g. polymers, may be used to control the release of the benefit agent. For example, pH sensitive polymers which are typically insoluble at low pH, e.g. pH of from 1 to about 5 as generally found in the stomach, but soluble at higher pH, e.g. greater than pH of 5.5, as typically encountered in the small intestine. In particular, suitable polymers include without limitation: hydroxypropylmethyl cellulose, ethylcellulose, Eudragit RL100, Eudragit RS100, mixtures of Eudragit RL100/RS100, Eudragit S100, Eudragit NE30D, cellulose acetate, cellulose acetate butyrate, silicone, ethylcellulose dispersions (commercially available as Aquacoat^{®} FMC and Surrelease^{®} (coloron).

As used herein, the term "companion animal" refers to domesticated animals. Companion animals exclude humans. The animal is a mammal. The companions animals are dogs and cats.

Some embodiments of the present invention comprise a "palatant" or "palatability improving agent". As used herein, the term "palatability improving agent" or "palatant" include any composition that alters the palatability of the composition to which it is added. The palatability improving agents of the invention can be meat-based or non-meat based derived from meat.

The pet food compositions comprise insoluble, inert fibers (pecan fiber and cellulose), the probiotic soluble fiber (beet pulp), and fiber-bound polyphenols (cranberry pomace, pomegranate extract, green tea extract). In some embodiments, the pet food composition generally comprises hydrolyzed animal or plant protein comprising a nutritionally complete amino acid profile (e.g., dried chicken livers), peptidyl glutamine (e.g., Hyvital^{®} wheat glutamine PN), the insoluble, inert fibers as set forth herein (pecan fiber, oat, and cellulose), medium chain triglycerides, high docosahexaenoate fish oil, ginger root powder, boswellia serrata extract, and yeast beta glucan.

In another embodiment, the pet food composition comprises the components set forth in Table 1 below in the designated amounts, based upon the total weight of the pet food composition.

**Table 1**

| **Description** | **Preferred Active Content Range (w/w %)** |
|---|---|
| Chicken, livers, hydrolyzed, dry | 25-45 |
| Hyvital^{®} wheat glutamine PN | 0.25-2 |
| Lysine, l, hydrochloride | 0.1-0.75 |
| Methionine, dl | <0.08 |
| Taurine | 0.075-0.2 |
| Captex^{®} 355 Medium Chained Triglyceride | 1-5 |
| Cellulose, coarse | 1-5 |
| Beet, pulp | 1-3 |
| OatWell^{®} 22 oat bran | 2-5 |
| Pecan Fiber | 1-5 |
| MEG-3^{®} 0355TG Fish Oil | 0.5-2.5 |
| Ginger Root Powder | 0.5-2 |
| Cranberry Pomace | 0.1-0.4 |
| Pomegranate Extract WS | 0.1-0.4 |
| Green Tea PE 50% EGCG WS | 0.1-0.4 |
| Boswellia PE 65% Boswellic Acids | 0.05-0.3 |
| Sensimune^{™} 75 (Yeast Cell Wall) | 0.05-0.3 |

The pet food compositions set forth herein may be formed by extrusion to form a kibble-type pet food composition. The milled raw ingredients of the composition are extruded and then a surface coating comprising a palatant and/or a nutritional oil is applied. In some embodiments, the kibble is spray coated in a tumbling mixer with a composition comprising a palatant and/or a nutritional oil. In other embodiments, the kibble is coated using a vacuum enrobing technique, wherein the kibble is subjected to vacuum and then exposed to coating materials after which the release of the vacuum drives the coating materials inside the kibble.
The invention will now be described in conjunction with the following, non-limiting examples.

### EXAMPLES

### Example 1

An exemplary pet food composition (Example 1) is prepared as set forth in Table 2 (below). All amounts are provided in weight percent, based upon total weight of the pet food composition. The composition is formulated according to the nutrition standards set forth by the American Associated of Feed Control Officials (AAFCO) and the National Research Council (NRC). The composition is produced by extrusion, dried, and then coated with palatants.

**Table 2**

| **Ingredient** | **Example 1** |
|---|---|
| | **w/w %** |
| Chicken, livers, hydrolyzed, dry | 36.79 |
| Corn, starch, common canning | 32.45 |
| Choice White Grease | 1.00 |
| Vitamin Premix | 0.12 |
| Vitamin, premix, canine/feline, z/d, dry | 0.20 |
| Mineral, premix, 2305 | 0.08 |
| Vitamin E, oil, 29% | 0.10 |
| Hyvital^{®} Wheat Glutamine PN | 1.00 |
| Lysine, 1, hydrochloride | 0.50 |
| Methionine,dl | 0.07 |
| Taurine | 0.10 |
| Captex^{®} 355 Medium Chained Triglyceride | 4.00 |
| Cellulose, coarse | 3.00 |
| Lactic acid, food grade | 1.50 |
| Dicalcium phosphate | 1.20 |
| Chicken, liver, digest, optimizor LDPE H | 2.00 |
| Sodium chloride, iodized | 0.40 |
| Choline chloride, liquid, 70% | 0.25 |
| Calcium carbonate | 2.00 |
| Potassium chloride | 0.70 |
| Beet, pulp | 2.50 |
| OatWell^{®} 22 oat bran | 3.00 |
| Pecan Fiber | 2.00 |
| MEG-3^{®} 0355TG Fish Oil | 1.50 |
| Ginger Root Powder | 1.00 |
| Palatant | 0.75 |
| Natural flavor, Pork, Liver, Digest, D'T | 0.50 |
| Glyceryl monostearate | 0.25 |
| Cranberry Pomace | 0.20 |
| Pomegranate Extract WS | 0.20 |
| Green Tea PE 50% EGCG WS | 0.20 |
| Boswellia PE 65% Boswellic Acids | 0.20 |
| Sensimune^{™} 75 (Yeast Cell Wall) | 0.15 |

To test the efficacy of the composition, an IACUC (Institutional Animal Care and Use Committee)-approved protocol is implemented which enrolled 13 canines having IBD, along with 13 healthy controls matched for age, weight and sex. Canines are assessed by analyzing blood and fecal markers of biochemical and clinical health. The study is a longitudinal cross-over design with both healthy dogs and dogs having IBD receiving each diet (Example 1 and a control diet). The control diet pet food composition is a commercially available under the brand Hill's^{®} i/d^{®} from Hill's Pet Nutrition, Inc. Diets are fed for four (4) weeks, after all of the animals are given a prefeed of one (1) week on whichever diet the dogs are consuming prior to test enrollment. Testing is then performed at a baseline time point (considered week 0; immediately after the 1 week prefeed), as well as at week 4 (Phase 1) and week 8 (Phase 2).

Stool scores are assessed on a five-point scale, with 5 being the healthiest (firmest) stool. Stools are further subjected to moisture and ash analysis, and the ash is subjected to mineral analysis. Bioactive markers of systemic chronic inflammation are also assessed in serum via metabolomics screening. The circulating level of basophils in the blood are also analyzed by clinical instrumentation. Lastly, stool quality is also examined by subjective (visual firmness score) and objective (osmolytes, organic dry matter).

As shown in Table 3 below, the test diet increased the number of stools with stool scores of 5 relative to the baseline and control diet.

**Table 3**

| **Time Point** | **Canine Group** | **Diet** | **Fecal Scores** |
|---|---|---|---|
| Baseline | Healthy | Baseline | 4, 5, 4, 5, 4, 4, 5, 5, 5, 5, 5, 5, 4 |
| | IBD | Baseline | 5, 4, 4, 4, 5, 5, 5, 4, 4, 5, 4, 4, 4 |
| Phase 1 | Healthy | Control | 5, 4, 5, 5, 4, 4, |
| | Healthy | Example 1 | 5, 5, 5, 5, 5, 5, 5 |
| | IBD | Control | 4, 2, 4, 5, 4 |
| | IBD | Example 1 | 5, 4,5, 5, 4, 4, 4 |
| Phase 2 | Healthy | Control | 4, 5, 5, 4, 5, 2, 5 |
| | Healthy | Example 1 | 5, 4, 5, 5, 4, 4 |
| | IBD | Control | 5, 3, 4, 3, 4, 5, 4 |
| | IBD | Example 1 | 4, 5, 5, 5, 4 |

As shown in Table 4 below, with respect to the moisture and ash analysis, the test diet consistently reduced moisture in stools and increased organic dry matter, and also generally decreased levels of sodium and potassium in feces, which has been shown to be associated with improved stool quality and reduced incidence of diarrhea.

**Table 4**

| **Time Point** | **Canine Group** | **Diet** | **Average Potassium Level (ppm)** | **Average Sodium Level (ppm)** | **Average Moisture Level (w/w %)** | **Average Organic Matter (w/w %)** |
|---|---|---|---|---|---|---|
| Baseline | Healthy | Baseline | 31.81 | 24.10 | 69.69 | 23.23 |
| | IBD | Baseline | 24.50 | 24.47 | 69.70 | 22.69 |
| Phase 1 | Healthy | Control | 23.27 | 32.38 | 67.07 | 25.27 |
| | Healthy | Example 1 | 21.99 | 13.67 | 65.22 | 26.72 |
| | IBD | Control | 34.77 | 23.19 | 66.14 | 23.71 |
| | IBD | Example 1 | 18.90 | 11.95 | 65.84 | 26.36 |
| Phase 2 | Healthy | Control | 25.26 | 23.06 | 67.37 | 25.38 |
| | Healthy | Example 1 | 21.42 | 14.67 | 66.51 | 25.88 |
| | IBD | Control | 22.20 | 18.23 | 67.62 | 25.00 |
| | IBD | Example 1 | 23.86 | 17.82 | 66.13 | 26.86 |

As shown in Table 5 below, regarding the assessment of the bioactive markers of inflammation, the test diet was shown to decrease levels of various phosphatidyl arachidonates, the precursors to pro-inflammatory prostaglandins, thus improving the inflammatory status in the dogs having IBD.

**Table 5**

| **Time Point** | **Canine Group** | **Diet** | **Average PA 1** | **Average PA 2** | **Average PA 3** | **Average PA 4** | **Average PA 5** |
|---|---|---|---|---|---|---|---|
| | | | **Relative Fold Level** | | | | |
| Baseline | Healthy | Baseline | 1.21 | 0.86 | 0.85 | 1.15 | 1.08 |
| | IBD | Baseline | 1.20 | 1.12 | 1.19 | 1.38 | 1.05 |
| Phase 1 | Healthy | Control | 0.98 | 1.12 | 1.08 | 1.58 | 1.15 |
| | Healthy | Example 1 | 1.19 | 1.05 | 1.17 | 0.84 | 1.07 |
| | IBD | Control | 1.08 | 1.10 | 0.98 | 1.23 | 1.08 |
| | IBD | Example 1 | 0.93 | 0.86 | 0.98 | 0.67 | 0.80 |
| Phase 2 | Healthy | Control | 0.80 | 1.08 | 1.04 | 1.22 | 1.19 |
| | Healthy | Example 1 | 0.86 | 0.97 | 1.04 | 0.92 | 0.89 |
| | IBD | Control | 1.07 | 0.96 | 0.84 | 0.95 | 0.95 |
| | IBD | Example 1 | 0.57 | 0.92 | 0.84 | 0.841. | 0.68 |

| | | | | | | | |
|---|---|---|---|---|---|---|---|
| ^{∗} PA 1 = 1-arachidonoyl-GPI (20:4) ^{∗} PA 2 = Palmitoyl-arachidonoyl-glycerophosphocholine (2) ^{∗} PA 3 = Stearoyl-arachidonoyl-glycerophosphocholine (2) ^{∗} PA 4 = Stearoyl-arachidonoyl-glycerophosphoethanolamine (1) ^{∗} PA 5 = Stearoyl-arachidonoyl-glycerophosphoinositol (2) | | | | | | | |

As used herein, "relative fold level" refers to a normalized concentration level that relates values for each sample to an average for all samples.

As shown in Table 6 (below), with respect to the basophil levels, the test diet increased basophil abundances in dogs having IBD, which can provide immune-normalization in these animals.

**Table 6**

| **Time Point** | **Canine Group** | **Diet** | **Average Basophils 1000 cells/µL** |
|---|---|---|---|
| Baseline | Healthy | Baseline | 170 |
| | IBD | Baseline | 70 |
| Phase 1 | Healthy | Control | 130 |
| | Healthy | Example 1 | 160 |
| | IBD | Control | 100 |
| | IBD | Example 1 | 270 |
| Phase 2 | Healthy | Control | 170 |
| | Healthy | Example 1 | 80 |
| | IBD | Control | 190 |
| | IBD | Example 1 | 60 |

As set forth in Table 7 below, regarding the analysis of the fecal markers of intestinal health, it is known that fecal polyamines provide intestinal health benefits, especially when generated in situ in the intestine by gut microbes rather than being administered through diet. The test diet was shown to increase the levels of fecal polyamines above the baseline.

**Table 7**

| **Time Point** | **Canine Group** | **Diet** | **Average Total Polyamines (Relative Fold Level)** |
|---|---|---|---|
| Baseline | Healthy | Baseline | 4.11 |
| | IBD | Baseline | 9.13 |
| Phase 1 | Healthy | Control | 7.53 |
| | Healthy | Example 1 | 14.32 |
| | IBD | Control | 13.08 |
| | IBD | Example 1 | 14.39 |
| Phase 2 | Healthy | Control | 10.57 |
| | Healthy | Example 1 | 21.47 |
| | IBD | Control | 11.30 |
| | IBD | Example 1 | 15.00 |

The data described in Tables 3 to 7, demonstrate that an exemplary composition of the present invention (Example 1) can improve IBD symptoms by improving stool quality, stool biochemical profile, circulating markers of biochemical and cellular immune status, and fecal metabolites associated with intestinal health.

### Example 2

To determine the immune optimization of a second exemplary pet food composition, a feeding trial is performed. An exemplary pet food composition (Example 2) is prepared as set forth in Table 8 below. All amounts are provided in weight percent, based upon total weight of the pet food composition. The composition is formulated according to the nutrition standards set forth by the American Associated of Feed Control Officials (AAFCO) and the National Research Council (NRC). The composition is produced by extrusion, dried, and then coated with a palatant. The process used to manufacture the composition described in Table 8 (below), ensures the creation of the inventive matrix of present invention.

**Table 8**

| **Ingredient** | **Example 2** |
|---|---|
| | **w/w %** |
| Rice, brewers | 25.00 |
| Pea, protein concentrate | 10.00 |
| Chicken Dried 10% Ash | 8.00 |
| Chicken, ground, fresh | 7.00 |
| Sorghum, whole | 6.36 |
| Chicken Meal | 6.14 |
| Pork Fat, Choice White Grease | 1.00 |
| Flax, seed, whole | 3.00 |
| Eggs, dried, granulated | 5.50 |
| Pecan Fiber | 4.80 |
| G03 Buckwheat Groats | 4.00 |
| Oat, groats | 4.00 |
| Captex 355 Medium Chained Triglyceride | 3.00 |
| Chicken, liver, digest, optimizor LDPE H | 2.00 |
| Oat, fiber | 1.50 |
| Citrus pulp | 1.50 |
| Beet, pulp, ground, fine | 1.50 |
| Lactic acid, food grade | 1.50 |
| Fish oil, TG, 18/12, NP | 1.20 |
| Flav Gen#1 + CWG | 1.00 |
| Vitamin Premix | 0.30 |
| Potassium chloride | 0.30 |
| Carnitine, 1, 10% | 0.27 |
| Natural flavor, Pork, Liver, Digest, D'T | 0.25 |
| Choline chloride, liquid, 70% | 0.18 |
| Sensimune 75 (Yeast Cell Wall) | 0.15 |
| Vitamin E, oil, 29% | 0.14 |
| Taurine | 0.10 |
| Sodium chloride, iodized | 0.10 |
| Lysine, 1, hydrochloride | 0.10 |
| Mineral, premix, 2305 | 0.04 |
| Oat Fiber, Fruit, Vegetable blend | 0.04 |
| Dicalcium phosphate | 0.04 |

A feeding trial is carried out on 24 canines in accordance with IACUC protocols. Blood is drawn prior to and after consumption of an exemplary composition of the present invention (Example 2) for six (6) weeks and ex vivo whole blood stimulation is performed. Specifically, whole blood is drawn from the canines who consumed Example 2 and split into two samples - one stimulated with bacterial endotoxin to induce acute inflammatory response, and the second kept in a parallel incubation without any stimulation. After 24 hours of incubation, the cultured blood (with and without stimulation) is subjected to analysis for inflammatory cytokines. The unstimulated condition provides a proxy assessment of basal inflammation, while the stimulated sample indicates the capacity for response to an immune challenge. Optimization is achieved when consumption of Example 2 increases the level of inflammatory cytokines in the unstimulated (basal) sample. Cytokines are measured by enzyme linked immunosorbent assay (ELISA).

As shown in Tables 9 and 10 (below), consumption of Example 2 increased stimulates cytokine production in a companion animal (e.g. canines). The cytokines which are analyzed are as follows: IL-12 (Interleukin 12), IL-6 (Interleukin 6), VEGF-A (vascular endothelial growth factor), NGF (nerve growth factor), SCF (stem cell factor), TNF-α (tumor necrosis factor alpha), MCP-1 (monocyte chemoattractant protein-1), INF-γ (interferon gamma), and IL-10 (Interleukin 10). Six of the ten measured cytokines statistically increased in stimulated whole blood from canines having consumed Example 2 for six weeks relative to baseline. In contrast, dietary consumption of Example 2 left subjects with nearly unchanged cytokine production from unstimulated whole blood. This indicates that, despite Example 2 increasing a canine's response to acute immune stimulation, it does not increase basal inflammation.

**Table 9**

| **Diet** | **Average IL-12** | **Average IL-6** | **Average VEGF-A** | **Average NGF** | **Average SCF** | **Average TNF-α** |
|---|---|---|---|---|---|---|
| | **pg/mL** | | | | | |
| Baseline | 412.44 | 571.32 | 69.21 | 7.18 | 37.57 | 1089.93 |
| Example 2 | 565.77 | 796.12 | 103.00 | 11.64 | 46.70 | 1381.04 |

**Table 10**

| **Diet** | **Average MCP-1** | **Average VEGF-A** | **Average INF-γ** | **Average IL-10** |
|---|---|---|---|---|
| | **pg/mL** | | | |
| Baseline | 136.44 | 13.95 | 5.69 | 4.49 |
| Example 2 | 70.68 | 10.95 | 3.75 | 5.18 |

### Example 3

Two additional experiments are conducted to determine post-biotic production after consumption of exemplary pet food compositions of the present invention (Examples 2 and 3). The ingredient listing for Example 2 is set forth hereinabove in Table 8; and the ingredient listing for Example 3 is set forth in Table 11 (below). All amounts are provided in weight percent, based upon total weight of the pet food composition. The compositions are formulated according to the nutrition standards set forth by the American Associated of Feed Control Officials (AAFCO) and the National Research Council (NRC). The compositions may be extruded, dried, and then coated with a composition comprising a palatant. Similar to Example 2, the process used to manufacture the composition described in Table 11, ensures the creation of the inventive matrix of present invention.

**Table 11**

| **Ingredient** | **Example 3 (w/w %)** |
|---|---|
| Rice, Brewers | -- |
| Chicken Meal | 7.00 |
| Pea, protein concentrate | 8.00 |
| Cellulose, coarse | 4.00 |
| Chicken Dried 10% Ash | 6.00 |
| Barley, pearled, cracked | 20.00 |
| Chicken, ground, fresh | 8.00 |
| Flax, seed, whole | 2.00 |
| Coconut oil preserved | 4.00 |
| Chicken, liver, digest, optimizor LDPE H | 3.00 |
| Lactic acid | 1.50 |
| Methionine,dl | 0.64 |
| Potassium chloride | 0.50 |
| Sodium chloride, iodized | 0.60 |
| Fish oil, TG, 18/12, NP | 0.50 |
| Calcium carbonate | 0.30 |
| Choline chloride, liquid, 70% | 0.25 |
| Carnitine, 1, 10% | 0.30 |
| Vitamin Premix | 0.18 |
| Vitamin E, oil, 29% | 0.17 |
| Mineral, premix, 2305 | 0.08 |
| Taurine | 0.06 |
| Oat, groats | 10.00 |
| Buckwheat Groats | 6.92 |
| Pea, bran, meal | 5.00 |
| Tomato, pomace, | 5.00 |
| Citrus pulp | 3.00 |
| Beet, pulp, ground, fine | 3.00 |

Under the experiments described below, canines are fed diets in accordance with IACUC protocols.

### Experiment A - Feces Evaluation

Canines are fed a control diet or a diet consisting of Example 2 for six (6) weeks in a cross-over design. Subjects participated in a pre-feed phase consuming a maintenance diet (Hill's^{®} Science Diet^{®} Canine Adult, commercially available from Hill's Pet Nutrition, Inc.) for three (3) weeks prior to consuming the exemplary composition of the present invention (Example 2). A baseline measurement is performed at the conclusion of the pre-feed phase. The control diet contains lower levels of dietary sources of fiber-bound polyphenols and total fiber content, and the fiber is predominately in an insoluble form.

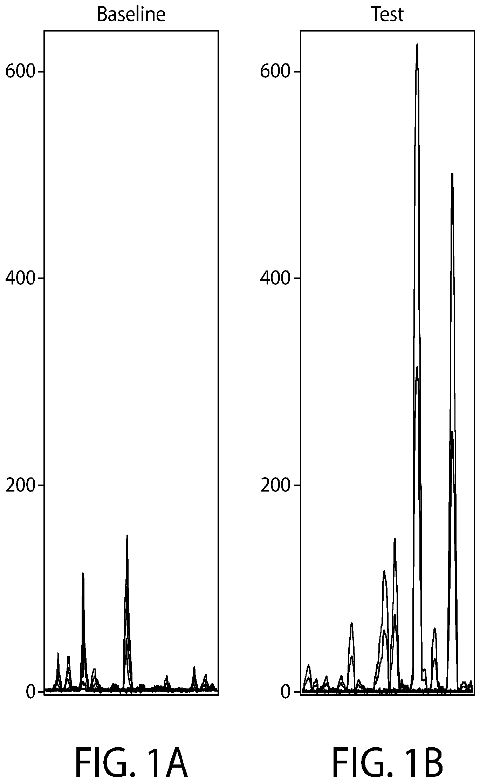

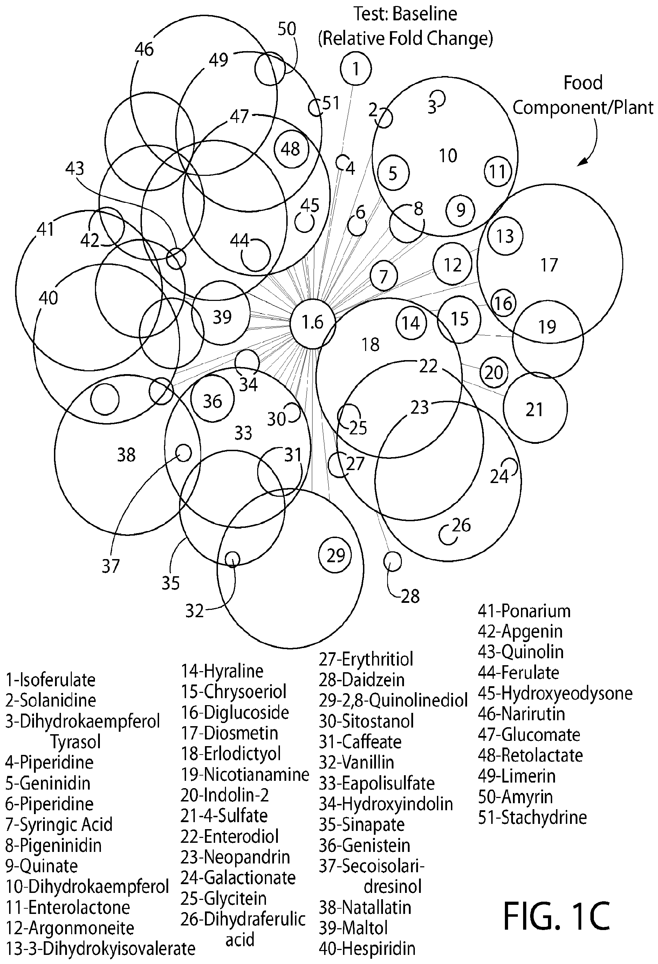

To assess the ability of Example 2 to provide targeted delivery of a polyphenol to the colon, fecal samples from canines fed a control diet and canines fed Example 2 are analyzed for differences in levels of polyphenols and polyphenol metabolites. Results of a multivariate profiling analysis of the polyphenols and metabolites are shown in Figures 1A & 1B, wherein the X axis depicts a series of polyphenols and their metabolites, and the Y axis scales relative levels of each of these found in the feces at baseline (Figure 1A); and after consuming a test diet consisting of the composition of Example 2 (Figure 1B). A pathway enrichment analysis is performed on the relative levels of polyphenols and metabolites (Figure 1C), with the food/plant component cluster showing statistical increase in test diet-fed dogs relative to baseline. As the data demonstrates, a comparison of relative levels of fecal polyphenols and post-biotics indicates that a diet consisting of Example 2 increases targeting of these bioactive agents to the colon more effectively than a diet consisting of a commercially available high-quality canine maintenance diet that did not include the inventive combination of features.

### Experiment B - Serum Evaluation

Canines are fed a control diet or a diet consisting of Example 3 for 13 consecutive weeks with no cross-over. There was no pre-feed period. The control diet contains lower levels of dietary sources of fiber-bound polyphenols than the experimental diet and is matched for total fiber content, but the fiber was largely in insoluble form.

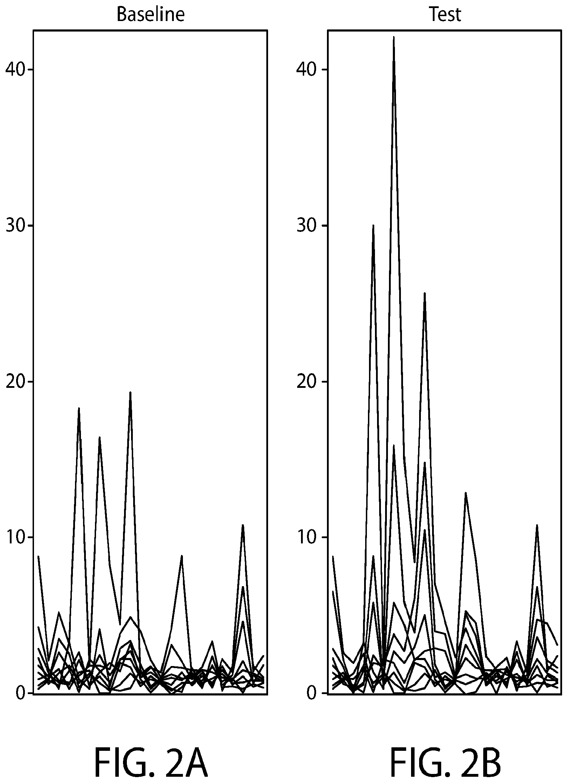

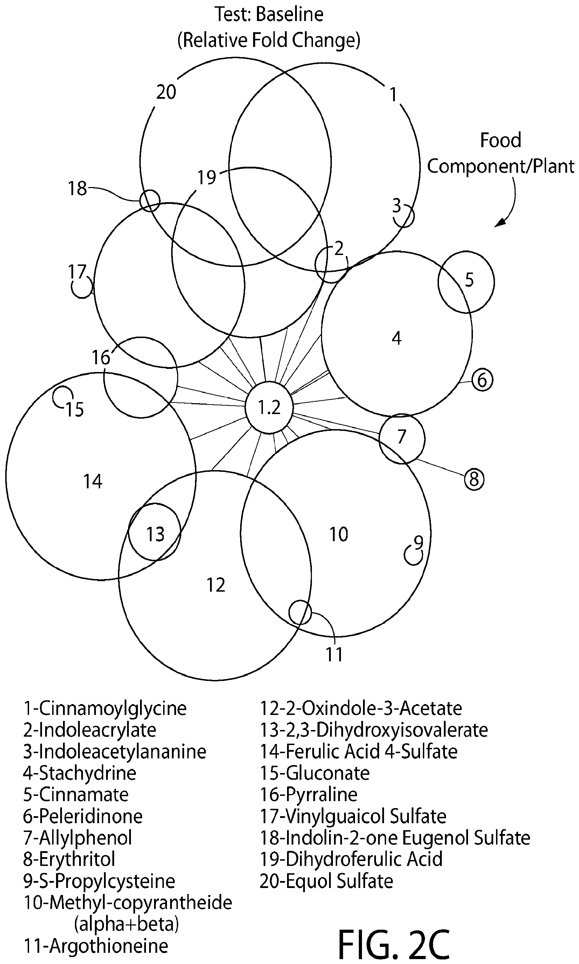

Serum from the same subjects at time points matched to fecal collections are also analyzed for the same metabolomic structures. Specifically, the serum samples are analyzed for differences in levels of microbial polyphenol metabolites and their Phase-II detoxication conjugated foms. Results of a multivariate profiling analysis of the polyphenols and metabolites are shown in Figures 2A & 2B, wherein the X axis depicts a series of serum-borne (un)conjugated microbial metabolites of polyphenols, and wherein the Y axis scales relative levels of each of these found in the serum at baseline (Figure 2A) and after consuming a test diet comprising a composition of Example 3 (Figure 2B). A pathway enrichment analysis is also performed on the relative levels of serum-borne (un)conjugated microbial metabolites of polyphenols (see Figure 2C), with the food/plant component cluster showing a statistically significant increase in test diet-fed dogs relative to baseline. As the data demonstrates, a comparison of relative levels of serum polyphenols and post-biotics indicates that a diet consisting of Example 3 increased targeting of these bioactive agents to the colon more effectively than a diet consisting of a commercially available high-quality canine maintenance diet that did not include the inventive combination of features.

### Experiment C - Microbial-derived Post-biotics

Serum levels of microbial-derived post-biotics are evaluated in canines fed an exemplary composition of the present invention (Example 3), which includes the inventive controlled release matrix, and a comparative composition, which does include the inventive controlled release matrix. Serum samples from canines fed the comparative composition and Example 3 for 13 weeks are analyzed for differences in levels of microbial polyphenol metabolites and their Phase-II detoxication conjugated forms. Pathway enrichment analysis is performed on the relative serum levels of (un)conjugated microbial metabolites of polyphenols. The results indicate that bacterial metabolites of certain food components appeared to a greater extent in the serum of canines fed Example 3 versus canines fed the comparative composition. These results further demonstrate the ability of the inventive compositions to provide targeted delivery of a benefit agent, e.g. a polyphenol.

## Claims

1. A controlled release pet food composition comprising:
a source of hydrolyzed animal or plant protein including a nutritionally complete amino acid profile; and a matrix comprising:
a fiber component comprising a high solubility fiber source and a low solubility fiber source, wherein the high solubility fiber comprises beet pulp, and wherein the low solubility fiber source comprises a combination of pecan fiber and a cellulosic material; and
a polyphenol source, wherein the polyphenol source comprises one or more of cranberry pomace, pomegranate extract, green tea extract;
wherein the matrix is extruded and adapted to deliver the polyphenol source to the lower gastrointestinal (GI) tract of a mammal after ingestion by the mammal,
wherein the mammal is a dog or a cat, and
wherein the weight ratio of the high solubility fiber source to the low solubility fiber source is from 1:20 to 1:2.

2. The pet food composition of claim 1, wherein the weight ratio of the high solubility fiber source to the low solubility fiber source is from about 1:15 to about 1:2, about 1:10 to about 1:3, about 1:5 to about 1:3, or about 1.4.

3. The pet food composition of any foregoing claim, wherein the high solubility fiber source further comprises oat bran, buckwheat groats, pea bran, barley, tomato pomace, citrus pulp, or a combination of two or more thereof.

4. The pet food composition of any foregoing claim, wherein the low solubility fiber source comprises pecan fiber, oat, and cellulose.

5. The pet food composition of any foregoing claim, wherein the polyphenol source is of food or plant origin.

6. The pet food composition of claim 4, wherein the polyphenol source is of food origin and comprises a polyphenol of fruit or vegetable origin.

7. The pet food composition of any foregoing claim, wherein the polyphenol source comprises a flavonoid or a phenolic acid.

8. The pet food composition of any foregoing claim, wherein the polyphenol source provides a polyphenol selected from: dehydroxy rosmarinic acid, Coumaroylnepitrin, eupafolin, carnosol, scutellarin, kaempferol, rosmarinic acid, rosmanol, cirsimaritin, luteolin, 6-methoxy-luteolin, 7-epirosmannol, quercetin, catechin, hesperidin, cyanidin, and a combination of two or more thereof.

9. The pet food composition of claim 1, wherein the source of hydrolyzed animal or plant protein comprises chicken liver.

10. The pet food composition of any foregoing claim, wherein the source of hydrolyzed animal or plant protein is present in an active content of from about 25 to about 45 wt. %.

11. The pet food composition of any foregoing claim, further comprising high docosahexaenoate fish oil.

12. The pet food composition of claim 11, wherein the active content of the high docosahexaenoate fish oil is from about 0.5 to about 2.5 wt. %.

13. A pet food composition according to any claim 1-12 for use in the treatment, prevention, or amelioration of a symptom of an inflammatory disease, condition, or disorder in a mammal, wherein the composition is to be administered in an effective amount to a mammal in need thereof, wherein the mammal is a dog or a cat.

14. A pet food composition according to any claim 1-12 for use in beneficially manipulating the gut microflora of a mammal, wherein the composition is to be administered in an effective amount to a mammal in need thereof, wherein the mammal is a dog or a cat.

15. A method of forming the pet food composition of any one of claims 1 to 12, comprising the steps of:
extruding the matrix to produce a kibble;
applying a surface coating to the kibble, optionally wherein the surface coating comprises a palatant;
wherein the matrix is adapted to deliver the polyphenol source to the lower gastrointestinal (GI) tract of the mammal after ingestion by the mammal, wherein the mammal is a dog or a cat.

## Patentansprüche

1. Haustierfutterzusammensetzung mit kontrollierter Freisetzung, umfassend:
eine Quelle für hydrolysiertes tierisches oder pflanzliches Protein, das ein ernährungsphysiologisch vollständiges Aminosäureprofil aufweist; und eine Matrix, die folgendes umfasst:
eine Faserkomponente, die eine Quelle für gut lösliche Ballaststoffe und eine Quelle für schwer lösliche Ballaststoffe umfasst, wobei die Quelle für gut lösliche Ballaststoffe Rübenschnitzel umfasst und wobei die Quelle für schwer lösliche Ballaststoffe eine Kombination aus Pekannussfaser und einem Zellulosematerial umfasst; und
eine Polyphenolquelle, wobei die Polyphenolquelle eines oder mehrere von Cranberry-Trester, Granatapfel-Extrakt, Grüntee-Extrakt umfasst;
wobei die Matrix extrudiert und so angepasst ist, dass sie die Polyphenolquelle an den unteren Gastrointestinaltrakt (GI) eines Säugetiers nach der Aufnahme durch das Säugetier abgibt,
wobei das Säugetier ein Hund oder eine Katze ist, und
wobei das Gewichtsverhältnis der Quelle für gut lösliche Ballaststoffe zur Quelle für schwer lösliche Ballaststoffe von 1:20 bis 1:2 beträgt.

2. Haustierfutterzusammensetzung nach Anspruch 1, wobei das Gewichtsverhältnis der Quelle für gut lösliche Ballaststoffe zur Quelle für schwer lösliche Ballaststoffe von etwa 1:15 bis etwa 1:2, etwa 1:10 bis etwa 1:3, etwa 1:5 bis etwa 1:3 oder etwa 1,4 beträgt.

3. Haustierfutterzusammensetzung nach einem der vorstehenden Ansprüche, wobei die Quelle für gut lösliche Ballaststoffe ferner Haferkleie, Buchweizengrütze, Erbsenkleie, Gerste, Tomatentrester, Zitrusfruchtfleisch oder eine Kombination von zwei oder mehr davon umfasst.

4. Haustierfutterzusammensetzung nach einem der vorstehenden Ansprüche, wobei die Quelle für schwer lösliche Ballaststoffe Pekannussfaser, Hafer und Zellulose umfasst.

5. Haustierfutterzusammensetzung nach einem der vorstehenden Ansprüche, wobei die Polyphenolquelle aus einem Nahrungsmittel oder einer Pflanze stammt.

6. Haustierfutterzusammensetzung nach Anspruch 4, wobei die Polyphenolquelle aus einem Nahrungsmittel stammt und ein Polyphenol umfasst, das aus Früchten oder Pflanzen stammt.

7. Haustierfutterzusammensetzung nach einem der vorstehenden Ansprüche, wobei die Polyphenolquelle ein Flavonoid oder eine Phenolsäure umfasst.

8. Haustierfutterzusammensetzung nach einem der vorstehenden Ansprüche, wobei die Polyphenolquelle ein Polyphenol bereitstellt, das ausgewählt ist unter: Dehydroxy-Rosmarinsäure, Coumaroylnepitrin, Eupafolin, Carnosol, Scutellarin, Kaempferol, Rosmarinsäure, Rosmanol, Cirsimaritin, Luteolin, 6-Methoxy-Luteolin, 7-Epirosmannol, Quercetin, Catechin, Hesperidin, Cyanidin und einer Kombination von zwei oder mehreren davon.

9. Haustierfutterzusammensetzung nach Anspruch 1, wobei die Quelle für hydrolysiertes tierisches oder pflanzliches Protein Hühnerleber umfasst.

10. Haustierfutterzusammensetzung nach einem der vorstehenden Ansprüche, wobei die Quelle für hydrolysiertes tierisches oder pflanzliches Protein in einem Aktivgehalt von etwa 25 bis etwa 45 Gew.-% vorhanden ist.

11. Haustierfutterzusammensetzung nach einem der vorstehenden Ansprüche, die ferner Fischöl mit hohem Docosahexaenoatgehalt enthält.

12. Haustierfutterzusammensetzung nach Anspruch 11, wobei der Aktivgehalt des Fischöls mit hohem Docosahexaenoatgehalt von etwa 0,5 bis etwa 2,5 Gew.-% beträgt.

13. Haustierfutterzusammensetzung nach einem der Ansprüche 1 bis 12 zur Verwendung bei der Behandlung, Vorbeugung oder Linderung eines Symptoms einer entzündlichen Krankheit, eines entzündlichen Zustands oder einer entzündlichen Störung bei einem Säugetier, wobei die Zusammensetzung in einer wirksamen Menge an ein Säugetier, das diese benötigt, zu verabreichen ist, wobei das Säugetier ein Hund oder eine Katze ist.

14. Haustierfutterzusammensetzung nach einem der Ansprüche 1-12 zur Verwendung bei der vorteilhaften Beeinflussung der Darmmikroflora eines Säugetiers, wobei die Zusammensetzung in einer wirksamen Menge an ein Säugetier, das diese benötigt, zu verabreichen ist, wobei das Säugetier ein Hund oder eine Katze ist.

15. Verfahren zur Herstellung der Haustierfutterzusammensetzung nach einem der Ansprüche 1 bis 12, umfassend die Schritte:
Extrudieren der Matrix zur Herstellung von Futterpellets;
Aufbringen einer Oberflächenbeschichtung auf die Futterpellets, wobei die Oberflächenbeschichtung optional einen Geschmacksträger umfasst;
wobei die Matrix so angepasst ist, dass sie die Polyphenolquelle an den unteren Gastrointestinaltrakt (GI) des Säugetiers nach der Aufnahme durch das Säugetier abgibt, wobei das Säugetier ein Hund oder eine Katze ist.

## Revendications

1. Composition alimentaire à libération contrôlée pour animaux de compagnie comprenant :
une source de protéines animales ou végétales hydrolysées comprenant un profil d'acides aminés complet sur le plan nutritionnel ; et une matrice comprenant :
un composant fibreux comprenant une source de fibres à haute solubilité et une source de fibres à faible solubilité, dans lequel la fibre à haute solubilité comprend de la pulpe de betterave, et dans lequel la source de fibres à faible solubilité comprend une combinaison de fibres de noix de pécan et d'un matériau cellulosique ; et
une source de polyphénols, la source de polyphénols comprenant un ou plusieurs parmi le marc de canneberge, l'extrait de grenade, l'extrait de thé vert ;
dans laquelle la matrice est extrudée et conçue pour délivrer la source de polyphénols au tractus gastro-intestinal (GI) inférieur d'un mammifère après ingestion par le mammifère,
dans laquelle le mammifère est un chien ou un chat, et
dans laquelle le rapport pondéral de la source de fibres à haute solubilité à la source de fibres à faible solubilité est de 1:20 à 1:2.

2. Composition alimentaire pour animaux de compagnie selon la revendication 1, dans laquelle le rapport pondéral de la source de fibres à haute solubilité à la source de fibres à faible solubilité est d'environ 1:15 à environ 1:2, d'environ 1:10 à environ 1:3, d'environ 1:5 à environ 1:3, ou d'environ 1,4.

3. Composition alimentaire pour animaux de compagnie selon l'une quelconque des revendications précédentes, dans laquelle la source de fibres à haute solubilité comprend en outre du son d'avoine, des gruaux de sarrasin, du son de pois, de l'orge, de la pulpe de tomate, de la pulpe d'agrumes ou une combinaison de deux ou plus de ceux-ci.

4. Composition alimentaire pour animaux de compagnie selon l'une quelconque des revendications précédentes, dans laquelle la source de fibres à faible solubilité comprend des fibres de noix de pécan, de l'avoine et de la cellulose.

5. Composition alimentaire pour animaux de compagnie selon l'une quelconque des revendications précédentes, dans laquelle la source de polyphénols est d'origine alimentaire ou végétale.

6. Composition alimentaire pour animaux de compagnie selon la revendication 4, dans laquelle la source de polyphénols est d'origine alimentaire et comprend un polyphénol provenant de fruits ou de légumes.

7. Composition alimentaire pour animaux de compagnie selon l'une quelconque des revendications précédentes, dans laquelle la source de polyphénols comprend un flavonoïde ou un acide phénolique.

8. Composition alimentaire pour animaux de compagnie selon l'une quelconque des revendications précédentes, dans laquelle la source de polyphénols fournit un polyphénol choisi parmi : l'acide déshydroxyrosmarinique, la coumaroylnépitrine, l'eupafoline, le carnosol, la scutellarine, le kaempférol, l'acide rosmarinique, le rosmanol, la cirsimaritine, la lutéoline, la 6-méthoxy-lutéoline, le 7-épirosmannol, la quercétine, la catéchine, l'hespéridine, la cyanidine et une combinaison de deux ou plus de ceux-ci.

9. Composition alimentaire pour animaux de compagnie selon la revendication 1, dans laquelle la source de protéines animales ou végétales hydrolysées comprend du foie de poulet.

10. Composition alimentaire pour animaux de compagnie selon l'une quelconque des revendications précédentes, dans laquelle la source de protéine animale ou végétale hydrolysée est présente en une teneur active d'environ 25 % à environ 45 % en poids.

11. Composition alimentaire pour animaux de compagnie selon l'une quelconque des revendications précédentes, comprenant en outre de l'huile de poisson à haute teneur en docosahexaénoate.

12. Composition alimentaire pour animaux de compagnie selon la revendication 11, dans laquelle la teneur en actif de l'huile de poisson à haute teneur en docosahexaénoate est d'environ 0,5 % à environ 2,5 % en poids.

13. Composition alimentaire pour animaux de compagnie selon l'une quelconque des revendications 1 à 12 pour une utilisation dans le traitement, la prévention ou l'amélioration d'un symptôme d'une maladie, d'un état ou d'un trouble inflammatoire chez un mammifère, dans laquelle la composition doit être administrée en une quantité efficace à un mammifère en ayant besoin, le mammifère étant un chien ou un chat.

14. Composition alimentaire pour animaux de compagnie selon l'une quelconque des revendications 1 à 12 pour une utilisation pour manipuler de manière bénéfique la microflore intestinale d'un mammifère, dans laquelle la composition doit être administrée en une quantité efficace à un mammifère en ayant besoin, dans laquelle le mammifère est un chien ou un chat.

15. Procédé de formation de la composition alimentaire pour animaux de compagnie selon l'une quelconque des revendications 1 à 12, comprenant les étapes de :
extrusion de la matrice pour produire une croquette ;
application d'un revêtement de surface sur la croquette, éventuellement dans lequel le revêtement de surface comprend un agent appétent ;
dans lequel la matrice est conçue pour distribuer la source de polyphénols au tractus gastro-intestinal (GI) inférieur du mammifère après ingestion par le mammifère, dans lequel le mammifère est un chien ou un chat.
